(19) Europäisches Patentamt
European Patent Office
Office européen des brevets

(11) Veröffentlichungsnummer : **0 495 748 A1**

(12) **EUROPÄISCHE PATENTANMELDUNG**

(21) Anmeldenummer : **92810001.5**

(22) Anmeldetag : **06.01.92**

(51) Int. Cl.$^5$ : **A01N 47/30,** // (A01N47/30, 43:713)

(30) Priorität : **09.01.91 CH 38/91**

(43) Veröffentlichungstag der Anmeldung : **22.07.92 Patentblatt 92/30**

(84) Benannte Vertragsstaaten : **BE CH DE DK ES FR GB GR IT LI LU NL**

(71) Anmelder : **CIBA-GEIGY AG**
**Klybeckstrasse 141**
**CH-4002 Basel (CH)**

(72) Erfinder : **Streibert, Hans-Peter**
**Brüelstrasse 15**
**CH-4312 Magden (CH)**
Erfinder : **Rindlisbacher, Alfred**
**Lachmattstrasse 69/3**
**CH-4132 Muttenz (CH)**

(54) **Akarizide Mittel.**

(57) Neue Schädlingsbekämpfungsmittel enthaltend die Wirkstoffkombination aus den Verbindungen Clofentezine und Diafenthiuron entfalten synergistische Wirkungsverbesserung. Die Mittel werden vor allem zur Bekämpfung von Schädlingen aus der Ordnung Akarina eingesetzt.

EP 0 495 748 A1

Die vorliegende Erfindung betrifft neue Schädlingsbekämpfungsmittel zur Kontrolle von Arthropoden aus der Ordung der Akarina, welche als aktive Komponente Wirkstoffkombinationen enthalten, sowie die Verwendung dieser Wirkstoffkombinationen zur Bekämpfung von Pflanzen und Tiere befallenden Schädlingen der Ordung Akarina.

Die Bekämpfung von Schädlingen aus dem Kreis der Arthropoda ist gegenwärtig in wachsendem Masse Schwierigkeiten ausgesetzt. Dabei spielen sowohl die Resistenzbildung bei den zu bekämpfenden Schädlingen gegen die im Einsatz befindlichen Schädlingsbekämpfungsmittel als auch die dadurch bedingte Steigerung der angewendeten Wirkstoffkonzentrationen wegen der verursachten Umweltbelastung eine wesentliche Rolle. Zur Vermeidung nachteiliger Folgen für die Umwelt muss deshalb eine Reduktion der Aufwandmengen chemischer Substanzen anbestrebt werden. Andererseits wird durch die Verwendung von niederen Wirkstoffkonzentrationen das Aufkommen von resistenten Schädlingsarten begünstigt und zudem keine Gewähr für die restlose Vernichtung der Schädlingspopulationen einschliesslich ihrer Entwicklungsstadien gewährleistet.

Zur Vermeidung dieser Nachteile ist es deshalb wünschenswert, für die Bekämpfung von Schädlingen, insbesondere der Akarina, Mittel bereitzustellen, die bereits bei geringen Aufwandmengen eine ausreichende Wirksamkeit erzielen und dabei weder die Bildung von Resistenzen fördern noch eine Belastung der Umwelt darstellen.

Ein in der Praxis häufig zur Bekämpfung der Akarina verwendeter Wirkstoff ist Clofentezine der Formel I

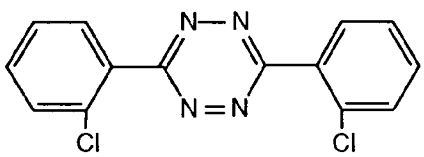

(I).

Bei der Anwendung dieses Wirkstoffes ist es in der Vergangenheit zur Entwicklung von Resistenz bei den behandelten Akarina-Stämmen gekommen. Es besteht daher das Bedürfnis nach einem Schädlingsbekämpfungsmittel, welches bei geringer Anwendungskonzentration eine hohe Wirksamkeit gegen Akarina aufweist. Insbesondere besteht ein Bedarf nach solchen Mitteln, die auch gegen resistente Stämme aus der Ordung der Akarina wirksam sind.

Überraschenderweise konnte jetzt mit dem erfindungsgemässen Kombinationsmittel dieses Bedürfnis weitgehend befriedigt werden.

Erfindungsgemäss wird zur Bekämpfung von Schädlingen der Ordnung Akarina ein Mittel vorgeschlagen, welche eine synergistisch wirkende Kombination des Wirkstoffs 3,6-Bis(2-chlorphenyl)- 1,2,4,5-tetrazin (Clofentezine) der Formel I

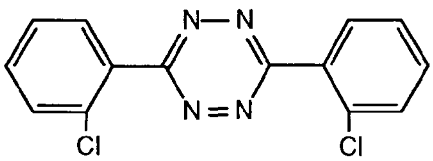

(I)

und des Wirkstoffs N-tert.Butyl-N'-(2,6-diisopropyl-4-phenoxy)-phenyl-thioharnstoff (Diafenthiuron) der Formel II

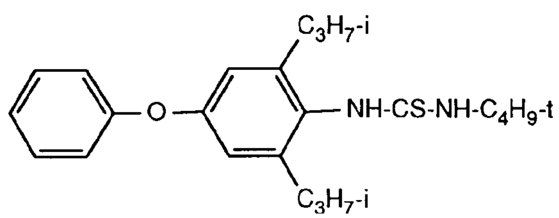

(II)

enthält.

Die Wirkstoffe der Formeln I und II sind in der Literatur zusammen mit ihren Herstellungsverfahren beschrieben, z.B. in den Patentpublikationen EP-A-5912 und GB-PS 2 060 626. Beide Wirkstoffe sind auch im Handel unter den Bezeichnungen APOLLO® und POLO® erhältlich.

Die erfindungsgemässe Wirkstoffkombination wird zur Kontrolle der verschiedenen Schädlinge der Ordung Akarina an Pflanzen und Tieren eingesetzt, indem entweder ein Kombinationspräparat verwendet wird, wobei beide Komponenten gleichzeitig appliziert werden, oder indem man die beiden Wirksubstanzen der Formeln I und II zeitlich kurz nacheinander appliziert. Möglich ist auch die gleichzeitige Applikation durch Einsatz einer sogenannten Tankmischung, die durch Zubereitung einer gemeinsamen verdünnten Spritzbrühe aus den einzeln formulierten Wirkstoffen der Formeln I und II hergestellt wird. Zweckmässig im Sinne der Anwendungs- und Wirkungssicherheit ist jedoch eine gemeinsame Formulierung beider Wirkstoffe, welche vom Verwender lediglich mit Wasser bis auf die Anwendungskonzentration verdünnt werden muss.

Bei der Anwendung der erfindungsgemässen Kombination der Wirkstoffe der Formeln I und II wird eine unerwartete synergistische Wirkungsverstärkung beobachtet. Insbesondere wird auch die Wirkung gegen solche Schädlinge synergistisch verstärkt, welche gegen den Wirkstoff Clofentezine eine Resistenz entwickelt haben.

Die erfindungsgemässe Wirkstotfkombination ist vorzugsweise einsetzbar gegen Zecken sowie gegen Pflanzen und Tiere befallende Milben. Insbesondere hevorzuheben ist die ausgezeichnete Wirksamkeit gegen phytopathogene Milben. Pflanzenkulturen, in denen phytopathogene Milben, insbesondere Spinnmilben als bedeutende Schädlinge auftreten, sind sowohl Zier- als auch Nutzpflanzenkulturen wie Baumwolle, Gemüse und Obstbau. Die erfindungsgemässe Kombination der Wirkstoffe I und II zeigt dabei eine sehr hohe Wirksamkeit gegen alle Entwicklungsstadien der bekämpften Milben. Es werden dabei sowohl die adulten Schädlinge als auch die verschiedenen Larvenstadien und die Eier abgetötet.

Erfindungsbemäss werden die Wirkstoffe der Formeln I und II bei der Anwendung oder in den erfindungsgemässen Kombinationsmitteln in solchen Mengenverhältnissen miteinander kombiniert, dass beim Zusammenwirken die biologischen Effekte synergistisch verstärkt werden. Im allgemeinen liegen die Gewichtsverhältnisse der Verbindungen der Formeln I und II dabei im Bereich von 100:1 bis 1:100 vor. Bevorzugt sind Mischungsverhältnisse zwischen 50:1 und 1:20, insbesondere zwischen 20:1 und 1:20, speziell zwischen 5:1 und 1:5. Bevorzugte Anwendungskonzentrationen in der Applikationssuspension betragen bei gemeinsamer Anwendung im allgemeinen zwischen 10 und 60 g Aktivsubstanz pro 100 l gebrauchsfertiger Suspension. Bevorzugt ist ein Bereich, bei dem 20 bis 40 g des Aktivstoffgemisches pro 100 l Suspension ausgebracht werden. Bei Applikation in Nutzpflanzenkulturen werden pro Hektar zwischen 50 und 1000 g Aktivsubstanzgemisch ausgebracht, vorzugsweise zwischen 100 und 450 g/ha. Bei Anwendungen im Bereich der Nutztierhygiene werden die gebrauchsfertigen Suspensionen beispielsweise auch für Viehbäder (cattle dips), in Sprühtunnels (spray races), bei Aufgussmethoden (pour on), bei Handsprüh- und Handwaschmethoden (hand-spray und handdressing) verwendet.

Die erfindungsgemässen Mittel besitzen eine besondere Eignung zur Bekämpfung von Pflanzen- und Tierschädlingen, da sie die dafür notwendigen Erfordernisse in hohem Masse erfüllen. So zeichnen sie sich durch folgende Eigenschaften aus:

- niedrige letale Minimumkonzentration für Schädlinge (besonders für resistente Formen),
- geringe Toxizität gegenüber Menschen und Nutztieren,
- mehrmonatige gleichmässige Wirkunsgdauer,
- keine Rückstandsprobleme.

Die Bedeutung der vorliegenden Erfindung besteht auch darin, dass die erfindungsgemässen Mittel auch erfolgreich gegen Zecken und Milben eingesetzt werden können und somit durch die Verhinderung der Ausbreitung von Krankheiten einen wichtigen Beitrag zur Gesunderhaltung von Mensch und Tier leisten. Darüber hinaus wird durch den Einsatz der erfindungsgemässen Mittel in der Landwirtschaft der Ertrag der Nutztiere und Nutzpflanzen bedeutend verbessert.

Die erfindungsgemässen Kombinationen der Wirkstoffe der Formeln I und II werden üblicherweise zusammen mit den in der Formulierungstechnik gebräuchlichen Trägerstoffen oder/und Zuschlagstoffen eingesetzt und können daher beispielsweise zu emulgierbaren Konzentraten, direkt versprüh- oder verdünnbaren Lösungen, verdünnten Emulsionen, Spritzpulvern, löslichen Pulvern, Stäubemitteln, Granulaten, auch Verkapselungen in polymeren Stoffen in bekannter Weise verarbeitet werden. Die Anwendungsverfahren, wie Versprühen, Vernebeln, Verstäuben, Verstreuen oder Giessen, werden ebenso wie die Mittel den angestrebten Zielen und den gegebenen Verhältnissen entsprechend gewählt.

Die Formulierung, das heisst die die Kombinationen der Wirkstoffe I und II und gegebenenfalls einen festen oder flüssigen Zusatzstoff enthaltenden Mittel, Zubereitungen oder Zusammensetzungen, werden in bekannter Weise hergestellt, zum Beispiel durch inniges Vermischen und/oder Vermahlen der Wirkstoffe mit Streckmitteln, wie beispielsweise mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$ von Alkylbenzolen wie Xylolgemische oder alkylierte Naphthaline, aliphatische oder cycloaliphatische Kohlenwasserstoffe, wie Cyclohexan, Paraffine oder Tetrahydronaphthalin, Alkohole wie Aethanol, Propanol oder Butanol, und Glykole sowie deren Aether und Ester, wie Propylenglykol, Dipropylenglykoläther, Aethylenglykol, Aethylenglykolmonomethyl- oder -äthyläther, Ketone, wie Cyclohexanon, Isophoron oder Diacetanolalkohol, starke polare Lösungsmittel, wie N-Methyl-2-pyrrolidon, Dimethylsulfoxid oder Dimethylformamid oder Wasser, Pflanzenöle, wie Raps-, Rizinus-, Kokosnuss- oder Sojaöl; gegebenenfalls auch Silikonöle.

Als feste Trägerstoffe, beispielsweise für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäuren oder hochdisperse saugfähige Polymerisate zugesetzt werden. Als gekörnte, adsorptive Granulatträger kommen poröse Typen, wie Bimsstein, Ziegelbruch, Sepiolit oder Bentonit, als nicht sorptive Trägermaterialien Calcit oder Sand in Frage. Darüberhinaus kann eine Vielzahl von granulierten Materialien anorganischer oder organischer Natur, wie insbesondere Dolomit oder zerkleinerte Pflanzenrückstände, verwendet werden.

Als oberflächenaktive Verbindungen kommen nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sogenannte wasserlösliche Seifen als auch wasserlösliche synthetische oberflächenaktive Verbindungen sein.

Als Seifen eignen sich die Alkali-, Erdakali- oder gegebenenfalls substituierten Ammoniumsalze von höheren Fettsäuren ($C_{10}$-$C_{22}$), wie die Natrium- oder Kalium-Salze der Oel- oder Stearinsäure, oder von natürlichen Fettsäuregemischen, die beispielsweise aus Kokosnuss- oder Tallöl gewonnen werden können. Ferner sind als Tenside auch die Fettsäuremethyl-taurin-salze zu erwähnen.

Häufiger werden jedoch sogenannte synthetische Tenside verwendet, insbesondere Fettsulfonate, Fettsulfate, sulfonierte Benzimidazolderivate oder Akylarylsulfonate.

Die Fettsulfonate oder -sulfate liegen in der Regel als Akali-, Erdalkali- oder gegebenenfalls substituierte Ammoniumsalze vor und weisen im allgemeinen einen Alkylrest mit 8 bis 22 C-Atomen auf, wobei Akyl auch den Akylteil von Acylresten einschliesst, beispielsweise das Natrium- oder Calcium-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2 Sulfonsäuregruppen und einen Fettsäurerest mit etwa 8-22 C-Atomen. Alkylarylsulfonate sind zum Beispiel die Natrium-, Calcium- oder Triäthanolaminsalze der Dodecylbenzolsulfonsäure, der Dibutylnaphthalinsulfonsäure oder eines Naphthalinsulfonsäure-Formaldehydkondensationsproduktes. Ferner kommen auch entsprechende Phosphate, wie zum Beispiel Salze des Phosphorsäureesters eines p-Nonylphenol- (4-14)-Aethylenoxid-Adduktes oder Phospholipide in Frage.

Als nichtionische Tenside kommen in erster Linie Polyglykolätherderivate von aliphatischen oder cycloaliphatischen Akoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Akylrest der Alkylphenole enthalten können. Weiterhin geeignete nichtionische Tenside sind die wasserlöslichen 20 bis 250 Aethylenglykoläthergruppen und 10 bis 100 Propylenglykoläthergruppen enthaltenden Polyäthylenoxid-Addukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykol-Einheiten.

Als Beispiele nichtionischer Tenside seien Nonylphenolpolyäthoxyäthanole, Ricinusölpolyglykoläther, Polypropylen-Polyäthylenoxid-Addukte, Tributylphenoxypolyäthoxyäthanol, Polyäthylenglykol und Octylphenoxypolyäthoxyäthanol erwähnt. Ferner kommen auch Fettsäureester von Polyoxyäthylensorbitan, wie das Polyoxyäthylensorbitan-trioleat in Betracht.

Bei den kationischen Tensiden handelt es sich vor allem um quarternäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, beispielsweise das Stearyltrimethylammoniumchlorid oder das Benzyl-di-(2-chloräthyl)-äthylammoniumbromid.

Die in der Formulierungstechnik gebräuchlichen Tenside sind beispielsweise in folgenden Publikationen beschrieben:

"Mc Cutcheon's Detergents and Emulsitiers Annual", Mc Publishing Corp., Glen Rock, NJ, USA, 1988",
H. Stache, "Tensid-Taschenbuch", 2. Aufl., C. Hanser Verlab München, Wien 1981.

M. and J. Ash. "Encyclopedia of Surfactants", Vol. I-III, Chemical Publishing Co., New York, 1980-1981.

Die pestiziden Zubereitungen enthalten in der Regel 0,1 bis 99 %, insbesondere 0,1 bis 95 % der Kombination der Wirkstoffe der Formeln I und II, 1 bis 99,9 % eines festen oder flüssigen Zusatzstoffes und 0 bis 25 %, insbesondere 0,1 bis 25 %, eines Tensides. Während als Handelsware eher konzentrierte Mittel bevorzugt werden, verwendet der Endverbraucher in der Regel verdünnte Zubereitungen, die wesentlich geringere Wirkstoffkonzentrationen aufweisen.

Insbesondere setzen sich bevorzugte Formulierungen folgendermassen zusammen:
(% = Gewichtsprozent)

Emulgierbare Konzentrate:

| | |
|---|---|
| Aktiver Wirkstoffgemisch: | 1 bis 90 %, bevorzugt 5 bis 20 % |
| oberflächenaktives Mittel: | 1 bis 30 %, vorzugsweise 10 bis 20 % |
| flüssiges Trägermittel: | 5 bis 94 %, vorzugsweise 70 bis 85 % |

Stäube:

| | |
|---|---|
| Aktives Wirkstoffgemisch: | 0,1 bis 10 %, vorzugsweise 0,1 % |
| festes Trägermittel: | 99,9 bis 90 %, vorzugsweise 99,9 bis 99 % |

Suspensions-Konzentrate:

| | |
|---|---|
| Aktives Wirkstoffgemisch: | 5 bis 75 %, vorzugsweise 10 bis 50 % |
| Wasser: | 94 bis 24 %, vorzugsweise 88 bis 30 % |
| oberflächenaktives Mittel: | 1 bis 40 %, vorzugsweise 2 bis 30 % |

Benetzbare Pulver:

| | |
|---|---|
| Aktives Wirkstoffgemisch: | 0,5 bis 90 %, vorzugsweise 1 bis 80 % |
| oberflächenaktives Mittel: | 0,5 bis 20 %, vorzugsweise 1 bis 15 % |
| festes Trägermaterial: | 5 bis 95 %, vorzugsweise 15 bis 90 % |

Granulate:

| | |
|---|---|
| Aktives Wirkstoffgemisch: | 0,5 bis 30 %, vorzugsweise 3 bis 15 % |
| festes Trägermittel: | 99,5 bis 70 %, vorzugsweise 97 bis 85 % |

Die Mittel können auch weitere Zusätze wie Stabilisatoren, z.B. gegebenenfalls epoxidierte Pflanzenöle (epoxidiertes Kokosnussöl, Rapsöl oder Sojaöl), Entschäumer, z.B. Silikonöl, Konservierungsmittel, Viskositätsregulatoren, Bindemittel, Haftmittel sowie Dünger oder andere Wirkstoffe zur Erzielung spezieller Effekte

enthalten.

Die folgenden Beispiele dienen der Erläuterung der Erfindung. Sie schränken die Erfindung nicht ein.

| Beispiel F1: Spritzpulver | a) | b) | c) |
|---|---|---|---|
| Wirkstoffgemisch I und II (1:1) | 25 % | 50 % | 75 % |
| Na-Ligninsulfonat | 5 % | 5 % | - |
| Na-Laurylsulfat | 3 % | - | 5 % |
| Na-Diisobutylnaphthalin-sulfonat | - | 6 % | 10 % |
| Octylphenolpolyäthylenglykol-äther (7-8 Mol AeO) | - | 2 % | - |
| Hochdisperse Kieselsäure | 5 % | 10 % | 10 % |
| Kaolin | 62 % | 27 % | - |

Das Wirkstoffgemisch wird mit den Zusatzstoffen vermischt und in einer geeigneten Mühle gut vermahlen. Man erhält Spritzpulver, die sich mit Wasser zu Suspensionen jeder gewünschten Konzentration verdünnen lassen.

| Beispiel F2: Emulsions-Konzentrat | |
|---|---|
| Wirkstoffgemisch I und II (5:1) | 10 % |
| Octylphenolpolyäthylenglykoläther (4-5 Mol AeO) | 3 % |
| Ca-Dodecylbenzolsulfonat | 3 % |
| Ricinusölpolyglykoläther (36 Mol AeO) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

| Beispiel F3: Stäubemittel | a) | b) |
|---|---|---|
| Wirkstoffgemisch I und II (50:1) | 5 % | 8 % |
| Talkum | 95 % | - |
| Kaolin | - | 92 % |

Man erhält anwendungsfertige Stäubemittel, indem das Wirkstoffgemisch mit dem Träger vermischt und auf einer geeigneten Mühle vermahlen wird.

Beispiel F4: Extruder-Granulat

| | |
|---|---|
| Wirkstoffgemisch I und II (1:5) | 10 % |
| Na-Ligninsulfonat | 2 % |
| Carboxymethylcellulose | 1 % |
| Kaolin | 87 % |

Das Wirkstoffgemisch wird mit den Zusatzstoffen vermischt, vermahlen und mit Wasser angefeuchtet. Dieses Gemisch wird extrudiert, granuliert und anschliessend im Luftstrom getrocknet.

Beispiel F5: Umhüllungs-Granulat

| | |
|---|---|
| Wirkstoffgemisch I und II (1:1) | 3 % |
| Polyäthylenglykol (MG 200) | 3 % |
| Kaolin | 94 % |

Das fein gemahlene Wirkstoffgemisch wird in einem Mischer auf das mit Polyäthylenglykol angefeuchtete Kaolin gleichmässig aufgetragen. Auf diese Weise erhält man staubfreie Umhüllungs-Granulate.

| Beispiel F6: Suspensions-Konzentrat | a) | b) | c) |
|---|---|---|---|
| Wirkstoffgemisch I und II (1:2) | 40 % | 50 % | 60 % |
| Aethylenglykol | 10 % | 10 % | 8 % |
| Nonylphenolpolyäthylenglykoläther (15 Mol AeO) | 6 % | 6 % | 5 % |
| Na-Ligninsulfonat | 10 % | 10 % | 5 % |
| Carboxymethylcellulose | 1 % | 1 % | 1 % |
| Silikonöl in Form einer 75 %igen wässrigen Emulsion | 1 % | 1 % | 1 % |
| Wasser | 32 % | 22 % | 20 % |

Das fein gemahlene Wirkstoffgemisch wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Biologische Beispiele

Beispiel B1: Wirkung gegen Tetranychus urticae

Bohnenpflanzen im 2-Blattstadium werden mit je 5 adulten Weibchen zweier gegen Clofentezine resistenter Stämme von Tetranychus urticae besiedelt. 24 Stunden nach der Besiedlung werden die infizierten Pflanzen mit wässrigen Suspensionen der Einzelwirkstoffe Clofentezine und Diafenthiuron sowie des Gemisches dieser Wirkstoffe in Konzentrationsreihen bis zur Tropfnässe in einer automatischen Spritzkabine besprüht. Anschliessend werden die Versuchspflanzen im Gewächshaus bei +25° C, 60 % relativer Luftfeuchtigkeit und einer Tageslichtdauer von 14 Stunden pro Tag kultiviert. Nach 14 Tagen erfolgt die Auswertung durch Abbürsten der Bohnenblätter und Auszählen der lebenden mobilen Stadien der Nachfolgegenerationen der Versuchstiere.

Im Vergleich zur unbehandelten Kontrolle wird so für die Einzelwirkstoffe und die Mischung jeweils die Mortalitätsrate der Schädlinspopulation in Prozent in Abhängigkeit von der Wirkstoffdosis ermittelt.

Testresultate:

a)

| Wirkstoff | Tetranychus urticae Stamm: SCHERING-ROSEN (Clofentezine-resistent) | |
|---|---|---|
| | Dosis [ppm] | Mortalität [%] |
| Verb. I | 3000 | 36 |
| | 4000 | 46 |
| | 6000 | 38 |
| | 8000 | 66 |
| | 16000 | 68 |
| Verb. II | 5 | 0 |
| | 10 | 0 |
| | 20 | 9 |
| | 50 | 28 |
| | 100 | 69 |
| | 200 | 77 |
| | 400 | 79 |
| 1:2-Gemisch Verb. I und Verb. II | 3,7 | 0 |
| | 7,5 | 7 |
| | 15 | 32 |
| | 30 | 50 |
| | 60 | 71 |

b)

| Wirkstoff | Tetranychus urticae Stamm: SCHERING-APFEL (Clofentezine-resistent) | |
|---|---|---|
| | Dosis [ppm] | Mortalität [%] |
| Verb. I | 1500 | 24 |
| | 3000 | 21 |
| | 4000 | 56 |
| | 8000 | 75 |
| | 16000 | 71 |
| Verb. II | 5 | 9 |
| | 10 | 37 |
| | 20 | 32 |
| | 40 | 34 |
| | 50 | 60 |
| | 100 | 95 |
| | 400 | 99 |
| 1:2-Gemisch Verb. I und Verb. II | 3,7 | 0 |
| | 7,5 | 0 |
| | 15 | 41 |
| | 30 | 60 |
| | 60 | 79 |

Aus den so erhaltenen Messwerten werden mittels der Probit-Analyse nach D.J. Finney (Probit Analysis,

2nd. Edition Cambridge University Press, 1952) die Dosis-Mortalitäts-Kurven berechnet. Aus diesen Kurven sind die $LD_{50}$-Werte (Konzentration, welche eine 50 % Mortalität der Testpopulation bewirkt) für die Einzelsubstanzen sowie für Wirkstoffkombinationen ablesbar: $LD_{50}I$ und $LD_{50}II$.

Auswertung:

Mit Hilfe dieser $LD_{50}$-Werte wird die Potenzierungsrate (PR) als Mass für den in Erscheinung tretenden Synergismus mittels der Cotox-Formel nach L. Banki (Bioassay of Pesticides in the Laboratory Research and Quality Control, p. 313, Akadémia Kiadó, Budapest, 1978) ermittelt.

Die Potenzierungsrate (PR) ergibt sich aus folgendem Quotienten:

$$PR = \frac{\widehat{LD_{50}}}{LD_{50}}$$

Im Nenner steht die $LD_{50}$ für den im toxikologischen Versuch gemessenen Wert der Wirkstoffkombination, während der Zähler

$$\widehat{LD_{50}} \ ,$$

den erwarteten Wert der Kombination bedeutet, der durch folgende Gleichung erhalten wird:

$$\widehat{LD_{50}} = \frac{1}{\dfrac{\mu\ I}{LD_{50}I} + \dfrac{\mu\ II}{LD_{50}II}}$$

Die Werte $\mu$ I und $\mu$ II bedeuten den relativen Anteil der betreffenden Mischungskomponente am Gesamtgemisch. Die Summe der Zahlenwerte $\mu$ I und $\mu$ II ergibt die Zahl 1.

PR-Werte von grösser als eins zeigen Potenzierung im Sinne einer synergistischen Wirkungsverstärkung zwischen den Mischungspartnern an.

Ergebnis

a) Tetranychus urticae (Stamm SCHERING-ROSEN)

| Wirkstoff | Gewichtsverhältnis des Gemisches | $LD_{50}$ | | Potenzierungsrate PR |
|---|---|---|---|---|
| | | berechnet | gefunden | |
| Verbindung I<br>Verbindung II | -<br>- | -<br>- | 5940<br>93 | -<br>- |
| Gemisch von Verbindung I mit Verbindung II | 1:2 | 138,4 | 30 | 4,6 |

b) Tetranychus urticae (Stamm SCHERING-APFEL)

| Wirkstoff | Gewichtsverhältnis des Gemisches | $LD_{50}$ (ppm) | | Potenzierungsrate PR |
|---|---|---|---|---|
| | | berechnet | gefunden | |
| Verbindung I<br>Verbindung II | -<br>- | -<br>- | 4820<br>25 | -<br>- |
| Gemisch von Verbindung I mit Verbindung II | 1:2 | 44,9 | 25 | 1,8 |

**Patentansprüche**

1. Schädlingsbekämpfungsmittel, dadurch gekennzeichnet, dass es neben einem Wirkstoff der Formel I

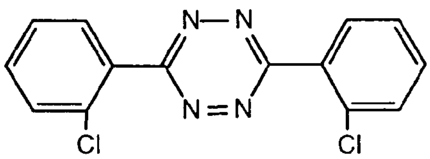

(I)

als zweite Aktivstoffkomponente einen Wirkstoff der Formel II

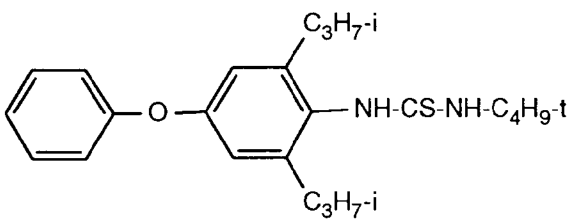

(II)

in einer eine synergistische Pestizidwirkung erzeugenden Menge enthält.

2. Mittel gemäss Anspruch 1, dadurch gekennzeichnet, dass es die Wirkstoffe der Formeln I und II im Gewichtsverhältnis von 100:1 bis 1:100, vorzugsweise 50:1 bis 1:20, insbesondere 20:1 bis 1:20 und speziell 5:1 bis 1:5 enthält.

3. Verfahren zur Bekämpfung von Schädlingen, dadurch gekennzeichnet, dass man die Schädlinge oder ihren Aufenthaltsort mit einem synergistische Pestizidwirkung erzeugenden Gemisch des Wirkstoffs der Formel I nach Anspruch 1, und des Wirkstoffs der Formel II nach Anspruch 1 behandelt.

4. Verfahren gemäss Anspruch 3 zur Bekämpfung von Schädlingen der Ordnung Akarina.

5. Verfahren gemäss Anspruch 4 zur Bekämpfung von phytopathogenen Spinnmilben.

6. Verfahren gemäss Anspruch 4 zur Bekämpfung von Zecken und Tiermilben mit Ausnahme der Behandlung des menschlichen und tierischen Körpers.

Europäisches Patentamt

# EUROPÄISCHER RECHERCHENBERICHT

Nummer der Anmeldung

EP 92 81 0001

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | C.R. WORTHING et al.: "The Pesticide Manual", 9. Auflage, 1991, Seiten 177,240, British Crop Protection Council, Farnham, GB<br>----- | 1-6 | A 01 N 47/30 //<br>(A 01 N 47/30<br>A 01 N 43:713) |
| | | | RECHERCHIERTE SACHGEBIETE (Int. Cl.5) |
| | | | A 01 N |

Der vorliegende Recherchenbericht wurde für alle Patentansprüche erstellt

| Recherchenort | Abschlußdatum der Recherche | Prüfer |
|---|---|---|
| DEN HAAG | 21-04-1992 | DECORTE D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)